Europäisches Patentamt

European Patent Office

Office européen des brevets

(11) Veröffentlichungsnummer: **0 289 706**
**A2**

## (12) EUROPÄISCHE PATENTANMELDUNG

(21) Anmeldenummer: 88101577.0

(51) Int. Cl.⁴: **H01M 6/16**

(22) Anmeldetag: 04.02.88

(30) Priorität: 02.05.87 DE 3714655

(43) Veröffentlichungstag der Anmeldung:
09.11.88 Patentblatt 88/45

(84) Benannte Vertragsstaaten:
BE DE FR GB IT

(71) Anmelder: **VARTA Batterie Aktiengesellschaft**
**Am Leineufer 51**
**D-3000 Hannover 21(DE)**

(72) Erfinder: **Nijhawan, Subash-Chander, Dr.**
**Dr.-Ing.**
**Im Sand 23**
**D-6242 Kronberg(DE)**
Erfinder: **Dennstedt, Welf, Dr.**
**Altenhaner Strasse 14**
**D-6233 Kelkheim(DE)**
Erfinder: **Daniel, Horst**
**Zur Kellerheide 6**
**D-6238 Hofheim 6(DE)**

(74) Vertreter: **Kaiser, Dieter Ralf, Dipl.-Ing.**
**Gundelhardtstrasse 72**
**D-6233 Kelkheim/Ts.(DE)**

(54) **Galvanisches Primärelement mit negativer Lithiumelektrode.**

(57) Primärzellen mit negativen Lithiumelektroden, positiven Elektroden aus Chromdioxid ($CrO_x$, wobei $2,0 \leq x \leq 2,9$), lassen sich unter Verzicht auf einen konventionellen Scheider zwischen den Elektrodenpolaritäten herstellen, weil sich in der Kontaktzone von selbst eine dünne Trennschicht aus Reaktionsprodukten des $CrO_x$ mit dem Li bildet, welche die Separatorfunktion übernimmt. Diese Trennschicht ist ionenleitend, nicht aber elektronenleitend, und besitzt einen geringeren ohmschen Widerstand als ein sonst verwendeter PP-oder Papierseparator. Dadurch ergibt sich eine höhere Strombelastbarkeit, die auch bei Zellen mit anderen Metalloxidkathoden wie $MnO_2$, $AgO$, $Ag_2O$ oder $Ni(OH)_2$ erzielt werden kann, sofern diese nur mit einer Deckschicht aus $CrO_x$ ummantelt sind.

EP 0 289 706 A2

## Galvanisches Primärelement mit negativer Lithiumelektrode

Die Erfindung betrifft ein galvanisches Primärelement mit negativer Lithiumelektrode, einer ein Chromoxid $CrO_x$ des Zusammensetzungbereichs $2,0 \leq x \leq 2,9$ enthaltenden positiven Metalloxidelektrode und einem nichtwässrigen Elektrolyten.

Eine unter Gattungsbegriff fallende $Li/CrO_x$-Zelle ist aus der DE-PS 27 26 380 bekannt. Bei ihrer handelsüblichen Ausführung als zylindrische Zelle sind zwei $CrO_x$-Ringe in einen vernickelten Stahlbecher von 14,8 mm Durchmesser und 50,5 mm Höhe eingepreßt, während der verbliebene zylindrische Hohlraum von einem Lithiumstrang mit Nagelableiter in einer umgebenden Separatorhülse eingenommen wird. Der im Separator enthaltene Elektrolyt besteht vorzugsweise aus einer Mischung von Propylencarbonat und Dimethoxiethan, in welcher Lithiumperchlorat als Leitsalz gelöst ist.

Das Anwendungsgebiet der Erfindung umfaßt jedoch auch andere lithiumorganische Systeme mit Metalloxidkathoden, in denen $CrO_x$ nur Teil einer im wesentlichen aus z.B. $MnO_2$, $AgO$, $Ag_2O$ oder $Ni(OH)_2$ bestehenden positiven Mischoxidmasse ist. Das $CrO_x$ kann auf einem Formkörper aus einem der erwähnten Metalloxide als äußere Deckschicht aufgepreßt sein.

Nicht zuletzt wegen der kompakten Anordnung der aktiven Bestandteile in einer solchen Zelle treten neben allen sonst gewünschten Eigenschaften des Separators, insbesondere die Absicherung der Elektroden vor einem Kurzschluß, auch dessen Nachteile stärker hervor. So stellt er aufgrund seines endlichen Widerstandswertes ein Hindernis für den Durchtritt des Ionenstromes dar und verringert die Belastbarkeit der Zelle. Insofern müssen hohe Anforderungen an die Porosität des Separators gestellt werden, was wiederum die Kosten für dieses Bauteil erhöht. Schließlich kann er wegen seines engen Preßsitzes zwischen strangförmiger Lithiumanode und Ringkathode den notwendigen Austausch zwischen Elektrolyt und Gasblasen behindern, was gelegentlich zu Störungen bei der Entladung führt.

Es ist bekannt, daß ein direkter Kontakt zwischen Anode und Kathodendepolarisator in einer elektrochemischen Zelle nicht in jedem Fall unbedingt zu vermeiden ist, da gewisse Kathodensubstanzen zumindest nicht in beliebigem Umgang mit einer angrenzenden aktiven Metallanode chemisch reagieren. Im Ergebnis überzieht sich die Metallanode nur mit einem dünnen Film, bestehend aus unlöslichen und in ihrer Zusammensetzung oft schwer zu identifizierenden Reduktionsprodukten des Kathodenmaterials, der einerseits über die Stärke einer Passivierungsschicht nicht hinausgeht, andererseits aber die Ladbarkeit und Entladbarkeit des Anodenmetalls nicht wesentlich einschränkt.

Eine Lithiumzelle dieser Art mit flüssigen Schwefeldioxid als Kathodendepolarisator, bei der wegen des eben angeführten Sachverhalts auf einen konventionellen Separator verzichtet werden kann, offenbart die US-PS 3,567,515. In diesem Falle übernimmt auf der Li-Oberfläche als Entladeprodukt gebildetes Lithiumdithionit die Separatorfunktion. Gemäß US-PS 3,926,669 verhält sich Lithium auch gegen Oxihalogenide und Thiohalogenide als Depolarisatoren, insbesondere Thionylchlorid, in einer elektrochemischen Zelle stabil. Bei einer der US-PS 4,049,890 entnehmbaren $Li/J_2$-Festkörperzelle besteht der Separator aus einer in situ gebildeten ionenleitenden Lithiumjodid-Zwischenschicht, die zugleich als Elektrolyt wirkt.

Der Erfindung liegt die Aufgabe zugrunde, ein galvanisches Primärelement nach dem eingangs formulierten Gattungsbegriff bereitszustellen, bei welcher die weiter vorn genannten Nachteile im Zusammenhang mit der konventionellen Separation, die bei Lithiumzellen meist aus Polypropylen oder Papier besteht, weitgehend beseitigt sind.

Die Aufgabe wird erfindungsgemäß mit den im kennzeichnenden Teil des Anspruchs 1 angegebenen Mitteln gelöst. Danach sind Lithium/Metalloxidzellen mit organischem Elektrolyten, deren positive Elektroden zumindest teilweise aus dem eingangs definierten Chromoxid $CrO_x$ bestehen, auch ohne Separator funktionsfähig. Dies ist möglich, weil die Berührung zwischen dem Lithium und der Metalloxidelektrode nicht zu einer elektronisch leitenden Brücke führt, wohl aber, und zwar unter wesentlicher Beteiligung des $CrO_x$, zu einer ionenleitenden Trennschicht. Dieses Ergebnis lieferte folgender Versuch:

Es wurden 50 $Li/CrO_x$-Zellen mit und ohne Separator gebaut und im Frischzustand sowie nach Lagerung getestet. Herstellung und Ausführung dieser Ver suchszellen entsprechen den handelsüblichen ER-AA-Typen, nur mit dem Unterschied, daß bei der Montage der Zellen ohne Separator nicht darauf geachtet zu werden brauchte, ob die Kathodenringe und der Lithiumstrang sich berührten. An den Ableitern aller Zellen ist unmittelbar nach dem Zusammenfügen eine Spannung von ca. 3,8 Volt nachweisbar.

Die Testergebnisse sind in der nachstehenden Tabelle 1 aufgezeichnet.

## Tabelle 1

Zustandswerte der Zelle

| | | mit Separator | ohne Separator | Differenz, bezogen auf die Ausführung "mit Separator" |
|---|---|---|---|---|
| **frisch** | | | | |
| | $U_0(V)$ | 3,89 | 3,89 | |
| | $U_b(V)$ | 3,30 | 3,54 | |
| | $R_i(\Omega)$ | 32 | 18 | – 44% |
| | Kap(mAh) | 2250 | 2550 | + 13% |
| **nach 40 Tagen 60°C** | | | | |
| | $U_0(V)$ | 3,88 | 3,88 | |
| | $U_b(V)$ | 2,60 | 2,80 | |
| | $R_i(\Omega)$ | 90 | 70 | – 22% |
| | Kap(mAh) | 2200 | 2530 | + 15% |
| **nach 90 Tagen 60°C** | | | | |
| | $U_0(V)$ | 3,88 | 3,88 | |
| | $U_b(V)$ | 2,60 | 2,90 | |
| | $R_i(\Omega)$ | 90 | 60 | –33% |
| | Kap(mAh) | 2175 | 2440 | + 12% |

$U_o(V)$ = offene Spannung
$U_b(V)$ = Spannung unter Last von $180\,\Omega$ 2 sec.
$R_i(\Omega)$ = Innenwiderstand unter Last von $180\,\Omega$ 2 sec.
Kap.(mAh) = unter Last von 1 K$\Omega$ entnommene Entladungskapazität

Diesen Zahlen zufolge haben die Zellen ohne Separator einen niedrigeren Innenwiderstand und damit eine bessere Belastbarkeit sowie eine höhere Kapazität als Zellen mit Separator. Die günstigeren Ergebnisse bei der Ausführung ohne Separator gelten sowohl für den frischen Zustand als auch für den Zustand nach Lagerung bei erhöhter Temperatur.

Es ist demnach möglich, mit dem $Li/CrO_x$-System Rundzellen mit eng eingebauten, zylindrischen Elektroden ohne Separator zu montieren und zu betreiben. Ein Kurzschluß tritt, wenn überhaupt, nur für sehr kurze Zeit auf, so daß die Zelle durch ihn nur in vernachlässigbar kleinem Umfang vorentladen wird.

Die Herstellbarkeit von Rundzellen, bei denen auf einen Separator verzichtet werden kann, wurde im Vorgehenden an Testzellen, die Metalloxidkathoden mit Chromoxid als dem alleinigen elektrochemisch reduzierbaren Bestandteil enthalten, aufgezeigt. Sie ist aber nicht auf reine Kathoden aus diesem Aktivmaterial beschränkt. Es konnte auch nachgewiesen werden, daß nicht nur im reinen $CrO_x$ Ionenleitung stattfindet, sondern daß auch die aus frischem bzw. teilentladenen $CrO_x$ bestehende Kontaktschicht gemäß der Forderung an einen Separator ionenleitend ist. Zu diesem Zweck wurde in einen Becher mit zwei

eingepreßten $CrO_x$-Ringen ein Lithiumstrang mit Nagelableiter ohne Separator und ohne Elektrolyt eingesetzt. Es bildete sich eine Spannung mit einem Maximalwert von 2,3 Volt, die über 3 h bestehen blieb. Sie konnte hochohmig (R = 1000 MΩ) gemessen werden, war aber nicht belastbar. Durch das Auftreten einer EMK ist jedoch offenkundig, daß sich bereits bei Kontaktierung der beiden Komponenten, ohne Anwesenheit eines Elektrolyten, grundsätzlich ein elektrochemisches Element an den Kontakpunkten bildet. Nach Zugabe eines Tropfens Elektrolyt (Propylencarbonat, Dimethoxiethan, $LiClO_4$), der sich zwischen Lithium und den $CrO_x$-Ringen verteilte, stieg die Spannung auf 3,6 Volt an.

Für die Eigenschaft des $CrO_x$ und des zwischen diesem und dem Lithium in der Kontaktzone gebildeten Reaktionsprodukts als Ionenleiter spricht auch, daß die Zellen keinen Kurzschluß haben. Da andererseits bei den erfindungsgemäßen Zellen nicht nur der konventionelle Separator als solcher wegfällt, sondern auch der durch ihn bewirkte Anteil am gesamten Innenwiderstand, werden Belastbarkeit und Kapazität der neuen Zellen, wie die Tabelle 1 schon gezeigt hat, noch verbessert.

## Ansprüche

1. Galvanisches Primärelement mit negativer Lithiumelektrode, einer ein Chromoxid $CrO_x$ des Zusammensetzungbereichs $2,0 \leq x \leq 2,9$ enthaltenden positiven Metalloxidelektrode und einem nichtwässrigen Elektrolyten, dadurch gekennzeichnet, daß die positive Elektrode von der negativen Elektrode lediglich durch eine elektronisch nichtleitende, jedoch Li-ionenleitende Zwischenschicht getrennt ist, welche ein Reaktionsprodukt zwischen Lithium und $CrO_x$ ist.

2. Galvanisches Primärelement mit negativer Lithiumelektrode nach Anspruch 1, dadurch gekennzeichnet, daß der alleinige reduzierbare Bestandteil der positiven Elektrode $CrO_x$ ist.